# EUROPEAN PATENT SPECIFICATION

(11) **EP 2 426 405 B1**
(45) Date of publication and mention of the grant of the patent: **07.06.2017**
(21) Application number: 11179860.9
(22) Date of filing: 02.09.2011
(51) Int. Cl.: F21S 10/02, F21V 23/04, F21V 15/01, G01J 3/46, G01J 3/50, F21Y 115/10, F21Y 113/13

(54) **Lighting module with variable colors and lamp**
Beleuchtungsmodul mit veränderlichen Farben und Lampe
Module d'éclairage avec couleurs variables et lampe

(30) Priority: 03.09.2010 TW 099129963; 28.06.2011 TW 100122692
(43) Date of publication of application: 07.03.2012
(73) Proprietor: Pegatron Corporation, Taipei City 112 (TW)
(72) Inventor: Ku, Hung-Chung, 112 Beitou District, Taipei City (TW); Wang, Tzu-Chung, 112 Beitou District, Taipei City (TW); Chang, Hsin-Hao, 112 Beitou District, Taipei City (TW)
(74) Representative: 2K Patentanwälte Blasberg Kewitz & Reichel

(56) References cited:
- US-A1- 2002 005 954
- US-A1- 2003 071 998
- US-A1- 2011 075 146
- US-B1- 7 428 994

## Description

### BACKGROUND OF THE INVENTION

### Field of Invention

The present invention relates to a lighting module with variable colors and a lamp.

### Related Art

Recently, the mood lights have become an indispensable element to enrich our regular lives. Some of them can emit lights with various colors to create different atmospheres in the room, so that they can provide not only the illumination function but also other applications. Some of them have special design on their appearances. For example, the functional operation can be integrated in the structure of the mood light, so that the users can operate it more intuitional or more human friendly.

However, the conventional mood light can only provide limited amount of colors, and it is usually passively controlled by the control system. For example, it usually emits light of a specific wavelength (color) based on the signal outputted from the control system. In other words, the convention mood light has the function of emitting lights with various colors, but it cannot operate independently. For example, it cannot actively determine the light color of the environment or a target and then automatically adjust itself. That is, the conventional lamp is restricted by the default selections, which may not provide the desired color light automatically.

Besides, regarding to the conventional mood light, it is usually configured with a contact switch for the selecting the color of the light source or enabling the operation mode. However, the contact switch may easily have bad contact due to factors of the push direction, contact area and applied force, and the response speed of the contact switch is slow. Thus, it cannot provide the user with the fast and accurate operations.

US 7 428 994 B relates to a toy or game piece for producing color includes a housing formed in the shape of a toy; a color reader to read a sample and generate data; a processing device to process the generated data and determine a color of the sample based on the generated data; and a light emitting element to produce light corresponding to the determined color. The light emitting element may include two or more light emitting diodes (LEDs) of different colors. The processing device controls the intensity of each LED to cause the light emitting element to produce the corresponding color that is substantially similar to the determined color. However, US 7 428 994 B fails to disclose that a charging unit is disposed surrounding an outer surface of the housing.

### SUMMARY OF THE INVENTION

It is an object of the present invention to provide a lighting module with variable colors and a lamp that can automatically change the color of the emitted light corresponding to the environment or a target, while the additional control system is not necessary, thereby encouraging the user to use it and decreasing the cost for creating the desired atmosphere. This object is solved by a lighting module with variable colors according to claim 1 and a lamp according to claim 14. Further advantageous embodiments are the subject-matter of the dependent claims.

The embodiment of the present invention discloses a lighting module with variable colors including an elastic portion, a color detecting unit and a light emitting unit. The elastic portion has an internal space. By applying a force, the elastic portion can be deformed so as to result a color transformation signal. The color detecting unit receives the color transformation signal and is initiated based on the color transformation signal for detecting a color of a target to generate a color signal. The light emitting unit is disposed in the elastic portion, and emits a light corresponding to the color signal. The lighting module with variable colors further includes a housing, a switch, a power supply unit and a charging unit. The housing is connected to the elastic portion, and the switch is disposed on the housing. The power supply unit is coupled to the switch, which enables the power supply unit to apply a power source to the light emitting unit. The charging unit is disposed surrounding the housing and coupled to the power supply unit.

In one embodiment of the invention, the lighting module with variable colors further includes a processing unit coupled to the light emitting unit and the color detecting unit. The processing unit controls the light emitting unit to emit the light corresponding to the color signal.

In one embodiment of the invention, the switch is a slide switch.

In one embodiment of the invention, the power supply unit is a secondary battery.

In one embodiment of the invention, the light emitting unit includes a light-emitting diode.

In one embodiment of the invention, the elastic portion is made of silica gel.

In one embodiment of the invention, the lighting module with variable colors further includes a pressure sensor coupled to the internal space of the elastic portion and the color detecting unit. The lighting module with variable colors detects the pressure change of the internal space to output the color transformation signal.

In the embodiment of the invention, the pressure sensor is an on-chip pressure sensor. In the embodiment of the invention, the pressure sensor includes an elastic element, an electrical conductive element and a switch element. The elastic element is coupled to the internal space of the elastic portion for detecting the pressure change of the internal space. The electrical conductive element is coupled to the elastic element. The switch element is coupled to the electrical conductive element for outputting the color transformation signal based on the pressure change of the internal space.

In the embodiment of the invention, the sensing range of the pressure sensor is between 26 and 300 Kpa.

In the embodiment of the invention, the sensing range of the pressure sensor is between 50 and 100 Kpa.

In one embodiment of the invention, the lighting module with variable colors further includes a magnetic element configured for turning on a reed switch when the lighting module with variable colors is disposed on a lamp, thereby enabling the lamp to emit light.

In one embodiment of the invention, the lighting module with variable colors further includes a transmission unit coupled to the color detecting unit for transmitting the color signal when the lighting module with variable colors is disposed on a lamp, thereby allowing the lamp to emit the light corresponding to the color signal.

The embodiment of the present invention also discloses a lamp including a lamp holder and a lighting module with variable colors according to the claims. The lamp holder has an accommodating space, and the lighting module with variable colors is disposed in the accommodating space. A transmission unit of the lighting module with variable colors transmits a color signal to the lamp holder, so that the lamp holder can emit the light in accordance with the color signal.

As mentioned above, the lighting module with variable colors and lamp of the invention may include the elastic portion which is deformed so as to result a color transformation signal, thereby enabling the color detecting unit to detect a color of a target. Thus, the embodiment of the present invention can detect the color of the environment or target as well as their wavelengths, so that it is possible to automatically change the color of the emitted light approximate to the wavelength of the environment or target. Moreover, the present invention can achieve the above without the additional control system, thereby rapidly and accurately responding any user operation.

These and other features, aspects and advantages of the present invention will become better understood with regard to the following description, appended claims, and accompanying drawings.

### BRIEF DESCRIPTION OF THE DRAWINGS

FIG. 1A is an exploded view of a lighting module with variable colors according to a preferred embodiment of the invention;
FIG. 1B is a block diagram of a lighting module with variable colors according to the preferred embodiment of the invention;
FIG 2A is a schematic diagram of the lighting module with variable colors according to the preferred embodiment of the invention;
FIG. 2B is a block diagram of the lighting module with variable colors according to the preferred embodiment of the invention;
FIGS. 3A and 3B are schematic diagrams showing the operation of the lighting module with variable colors of FIG. 2A, which detects the color of a target;
FIG. 4 is a schematic diagram showing another aspect of the pressure sensor of the lighting module with variable colors according to the preferred embodiment of the invention;
FIG. 5 is a schematic diagram of another lighting module with variable colors according to the preferred embodiment of the invention; and
FIG 6 is a schematic diagram of a lamp according to the preferred embodiment of the invention.

### DETAILED DESCRIPTION OF THE INVENTION

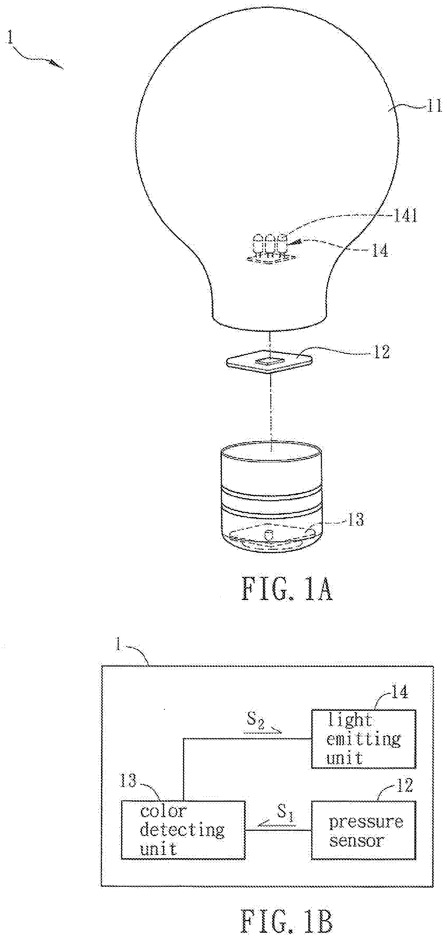

FIG. 1A is an exploded view of a lighting module with variable colors 1 according to a preferred embodiment of the invention, and FIG. 1B is a block diagram thereof. Referring to FIGS. 1A and 1B, the lighting module with variable colors 1 includes an elastic portion 11, a pressure sensor 12, a color detecting unit 13, and a light emitting unit 14. In this embodiment, the elastic portion 11 has an internal space, and it is integrally formed as a sphere. Of course, the elastic portion 11 may also be composed of two or more pieces. The elastic portion 11 may be a hand-hold portion with, for example but not limited to, cylindrical, long, or screw shape, so that the user can easily hold and operate it. Besides, the material of the elastic portion 11 is selected (e.g. silica gel), so that it can be deformed by applying a force to incur the pressure change inside the internal space. After the applied force is removed, the elastic portion 11 can rapidly recover its original appearance.

The pressure sensor 12 is coupled to the internal space of the elastic portion 11. In practice, the pressure sensor 12 is disposed in the internal space of the elastic portion 11 or at the opening of the elastic portion 11. The pressure sensor 12 is configured to detect the pressure change of the internal space of the elastic portion 11 and then output a color transformation signal S₁ based on the pressure change of the internal space of the elastic portion 11. In order to detect the tiny pressure change, the pressure sensor 12 can be an on-chip pressure sensor. The sensing range of the pressure sensor 12 is between 26 and 300 Kpa, and preferably between 50 and 100 Kpa.

The color detecting unit 13 is coupled to the pressure sensor 12. When receiving the color transformation signal S₁ from the pressure sensor 12, the color detecting unit 13 is initiated to detect a color of a target so as to generate a color signal S₂. In practice, the color detecting unit 13 can be any component capable of detecting the visible light with the wavelength between 400 and 700 nm. The color detecting unit 13 usually detects the wavelength of the light projected from the target to determine the color of the target. In this embodiment, the target can be an object with any color or a light source for emitting the light of any color.

The light emitting unit 14 is disposed in the elastic portion 11, and emits a light corresponding to the color signal S₂. Preferably, the light emitting unit 14 is disposed at the center of the elastic portion 11, so that the light can be uniformly emitted outwardly from the elastic portion 11. In practice, the light emitting unit 14 may include a light-emitting diode (LED) or other component for emitting the visible light. In this embodiment, the LED is preferably an RGB mixed LED, which has individual red, blue and green LED components 141.

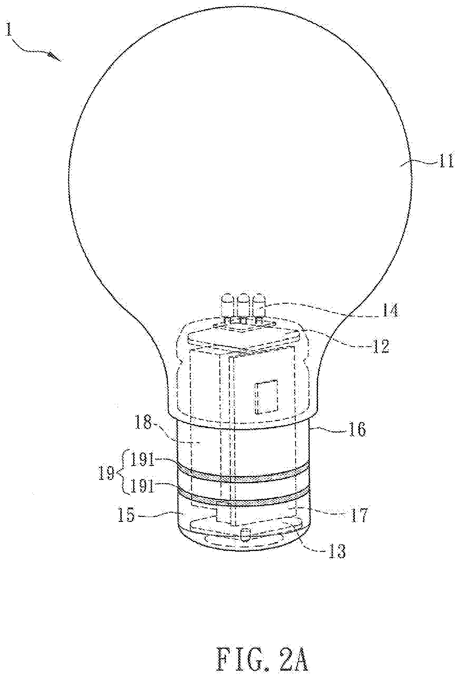

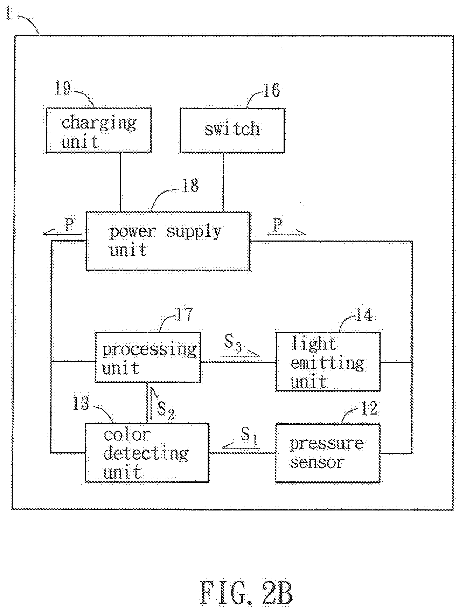

FIG. 2A is a schematic diagram of the lighting module with variable colors 1 according to the preferred embodiment of the invention, and FIG. 2B is a block diagram thereof. Referring to FIGS. 2A and 2B, the lighting module with variable colors 1 further includes a housing 15, a switch 16, a processing unit 17, a power supply unit 18, and a charging unit 19.

The housing 15 is connected to one end of the elastic portion 11. The material of the housing 15 may include metal, plastic or their combination. Besides, the housing 15 can be integrally formed as one piece, or composed of several components. In the embodiment, the housing 15 has a plurality of openings or other heat-dissipating structure configured for thermal convection or conduction. Moreover, the color detecting unit 13 may be partially exposed from the surface of the housing 15, so that it can surely receive the light emitted from the target and detecting the color of the target.

The switch 16 is disposed on the housing 15. In this embodiment, the switch 16 is a slide switch and is disposed on the outer surface of the housing 15. This configuration allows the operation more convenient and still remains the design of the lighting module with variable colors 1. When the user turns on/off the switch 16, the lighting module with variable colors 1 is controlled to enter the operation mode or the off mode. Beside, in practice, the switch 16 can be a push switch.

The processing unit 17 is disposed in the housing 15 and coupled to the color detecting unit 13 and the light emitting unit 14. The processing unit 17 receives the color signal S₂ generated by the color detecting unit 13, and then controls the light emitting unit 14 to emit the light corresponding to the color signal S₂. In practice, the processing unit 17 can be a microchip or a microprocessor. Besides, in this embodiment, the processing unit 17 and the color detecting unit 13 are coupled to each other and are individual components. However, in practice, the processing unit 17 and the color detecting unit 13 can be integrated as a single device or module. In other words, when the processing unit 17 and the color detecting unit 13 are integrated, as shown in FIG. 1B, the color detecting unit 13 can directly control the light emitting unit 14 to emit the light corresponding to the color signal S₂ based on the detecting result.

The power supply unit 18 is disposed in the housing 15 and coupled to the switch 16. When the switch 16 is switched to the operation mode, the power supply unit 18 is turned on for outputting a power source P to and driving the pressure sensor 12, the color detecting unit 13, the light emitting unit 14 and the processing unit 17. In this case, the power supply unit 18 is a secondary battery such as a Li-ion battery, Ni-H battery, or Li polymer battery.

The charging unit 19 is disposed surrounding the outer surface of the housing 15 and coupled to the power supply unit 18. In this embodiment, the charging unit 19 includes two metal rings 191 disposed around the housing 15, respectively, for conducting the power source. Through the configuration of the metal rings 191, the space for configuring the conventional plug charger as well as the caused affect in appearance design can be reduced.

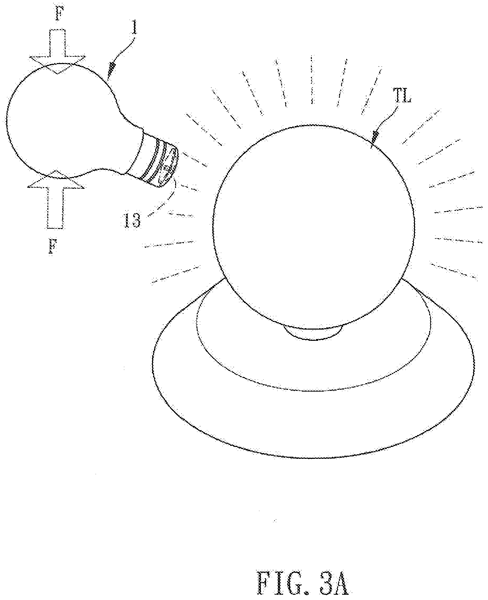

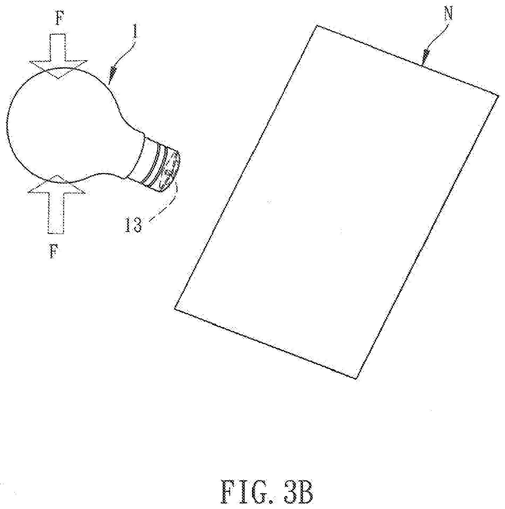

FIGS. 3A and 3B are schematic diagrams showing the operation of the lighting module with variable colors 1 of FIG. 2A, which detects the color of a target. The operation of the lighting module with variable colors 1 will be described hereinafter with reference to FIG. 3A in view of FIGS. 2A and 2B. If it is desired to make the lighting module with variable colors 1 to emit the light with the color the same as a target (e.g. the table lamp TL emitting blue light), the user turns on the switch 16 to allow the lighting module with variable colors 1 entering the operation mode. Then, the user may take the table lamp TL close to the lighting module with variable colors 1, and the color detecting unit 13 is disposed towards the light source. After that, an external force F is applied to the elastic portion 11 of the lighting module with variable colors 1 by, for example, crushing, pressing, and/or pinching, so that the elastic portion 11 can have a desired reformation. The applied force F can thus induce the pressure change inside the elastic portion 11. At the meanwhile, depending on the pressure change inside the elastic portion 11, the pressure sensor 12 can output a color transformation signal S₁ to the color detecting unit 13. After receiving the color transformation signal S₁, the color detecting unit 13 starts to detect for determining the wavelength of the light emitted by the table lamp TL, which can represent the color of the light emitted by the table lamp TL, thereby generating the color signal S₂. The processing unit 17 can output a control signal S₃ based on the color signal S₂ for controlling the light emitting unit 14 to emit the light in accordance with the color signal S₂. In this embodiment, the wavelength of the light entering the color detecting unit 13 and the wavelength of the light emitted from the lighting module with variable colors 1 are substantially the same. Consequently, the user can feel that the variable color light module 1 emits the color light the same as the target.

To be noted, regarding to the physiology structure of human eyes, the lights having the wavelengths within a certain range can be determined as the same color by human eyes; however, their measuring values may have slightly different while detected by specific equipment.

Referring to FIG. 3B in view of FIGS. 2A and 2B, the target is a red paper N for example. The difference between FIGS. 3A and 3B is in that the target in FIG. 3A is a table lamp TL which has a light source for actively emitting light, but the target in FIG 3B is a paper N, which is not a light source.

If it is desired to make the lighting module with variable colors 1 to emit the light with the color the same as the color of a paper N, the user turns on the switch 16 to allow the lighting module with variable colors 1 entering the operation mode. Then, the user may take the paper N close to the lighting module with variable colors 1, and apply an external force F to the elastic portion 11 of the lighting module with variable colors 1. At the meanwhile, depending on the pressure change inside the elastic portion 11, the pressure sensor 12 can output a color transformation signal S₁ to the color detecting unit 13. After receiving the color transformation signal S₁, the color detecting unit 13 receives the light from the paper N by diffracting, scattering, reflecting, diffusing, and then detects the light to determine its wavelength, thereby generating the corresponding color signal S₂. The processing unit 17 can output a control signal S₃ based on the color signal S₂ for controlling the light emitting unit 14 to emit the light in accordance with the color signal S₂.

According to the above-mentioned configurations, the lighting module with variable colors 1 can detect the color of the target and actively adjust to emit the light with the same color (substantially the same wavelength or approached wavelengths). In practice, the operation is to simply press the lighting module with variable colors 1. This can make the response of the lighting module with variable colors 1 faster and more accurate, thereby increasing its attraction to the user.

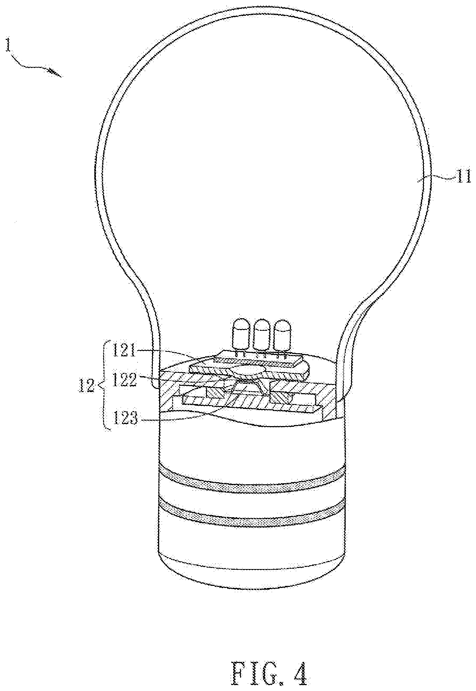

To be noted, in practice, the pressure sensor 12 can be changed or modified depending on the needs of products and designs. FIG. 4 is a schematic diagram showing another aspect of the pressure sensor 12 of the lighting module with variable colors 1 according to the preferred embodiment of the invention. Another structure of the pressure sensor 12 will be described hereinafter with reference to FIG. 4.

As shown in FIG. 4, the pressure sensor 12 includes an elastic element 121, an electrical conductive element 122, and a switch element 123. The elastic element 121 is coupled to the internal space of the elastic portion 11 for detecting the pressure change of the internal space. In practice, the elastic element 121 is made of an elastic material with electrical conductivity. The electrical conductive element 122, such as a metal sheet, is coupled to the elastic element 121. The switch element 123 is coupled to the electrical conductive element 122 and outputs the color transformation signal based on the pressure change of the internal space.

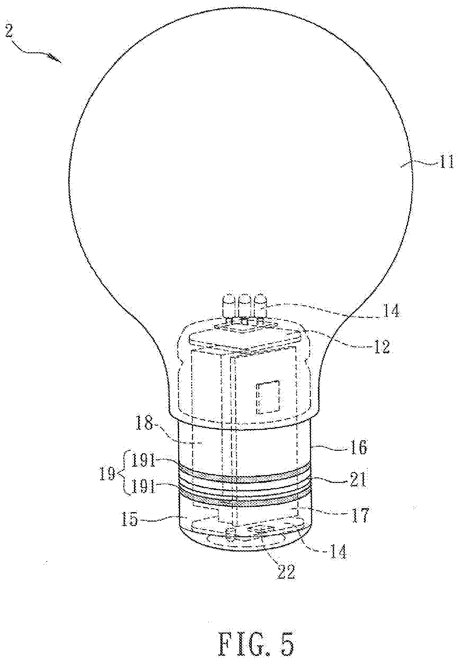

FIG. 5 is a schematic diagram of another lighting module with variable colors 2 according to the preferred embodiment of the invention. Compared with the lighting module with variable colors 1, the lighting module with variable colors_2 of FIG. 5 further includes a magnetic element 21 and a transmission unit 22. In this embodiment, the magnetic element 21 is disposed on the outer surface of the housing 15 for turning on a reed switch of a lamp holder when the lighting module with variable colors 2 is disposed on the lamp holder, thereby enabling the lamp to emit light. The transmission unit 22 is coupled to the color detecting unit 13 and the processing unit 17. When the lighting module with variable colors 2 is disposed on the lamp holder, the transmission unit 22 transmits the color signal to the lamp holder, thereby allowing the lamp to emit the light corresponding to the color signal. In practice, the transmission unit 22 can be a contact transmission unit or a non-contact transmission unit.

If the transmission unit 22 is a contact transmission unit, the transmission unit 22 of the lighting module with variable colors 2 can contact with a receiving unit of the lamp holder when the lighting module with variable colors 2 is disposed in an accommodating space of the lamp holder. In this case, the transmission unit 22 transmits the color signal to the receiving unit of the lamp holder, so that the lamp holder can emit the light corresponding to the color signal. Alternatively, if the transmission unit 22 is a non-contact transmission unit, the transmission unit 22 can directly transmit the color signal to the receiving unit of the lamp holder after the processing unit 17 receives the color signal from the color detecting unit 13. Thus, the lamp holder can emit the light corresponding to the color signal. The non-contact transmission unit is preferably an infrared transmission unit or any other wireless transmission technologies.

In practice, the transmission of the color signal can be an automatic transmission or a manual transmission. "Automatic transmission" means that the color signal is automatically transmitted after the color detecting unit 13 generates a new color signal. "Manual transmission" means that the user determines whether to perform the signal transmission. In detailed, the user may turn on a switch (not shown) to conduct the transmission of the color signal.

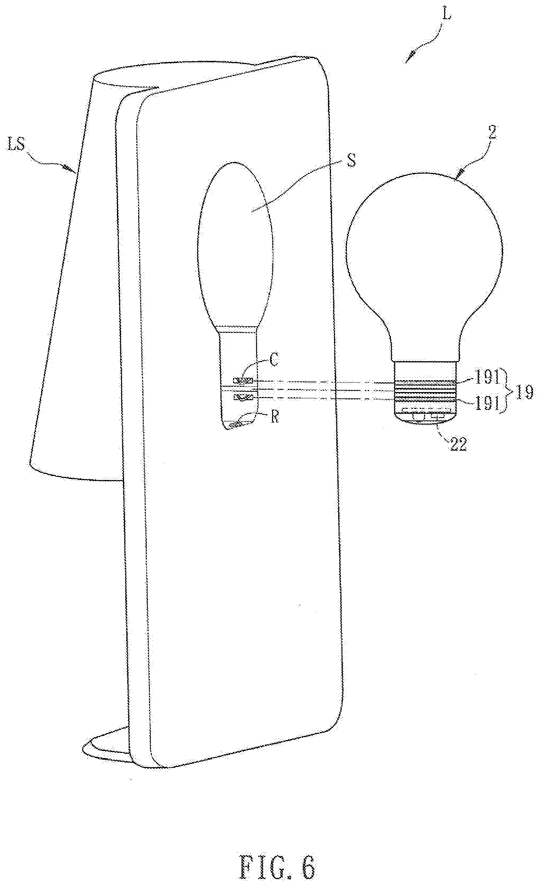

FIG. 6 is a schematic diagram of a lamp L according to the preferred embodiment of the invention. The lamp L includes a lamp holder LS and a lighting module with variable colors 2. In this embodiment, the lamp holder LS has an accommodating space S and a light emitting unit (not shown). The accommodating space S contains a reed switch M and a receiving unit R. When the lighting module with variable colors 2 is disposed in the accommodating space S of the lamp holder LS, the magnetic element 21 of the lighting module with variable colors 2 can turn on the reed switch M so as to allow the lamp holder LS to emit light. In addition, when the lighting module with variable colors 2 is disposed in the accommodating space S of the lamp holder LS, the transmission unit 22 of the lighting module with variable colors 2 can transmit the color signal to the lamp holder LS, so that the lamp holder LS can emit the light in accordance with the color signal.

Besides, a charging portion C is configured in the accommodating space S and is disposed corresponding to the metal rings 191 of the charging unit 19 of the lighting module with variable colors 2. The charging portion C preferably includes a set of compressible pins. When the lighting module with variable colors 2 is disposed in the accommodating space S, the charging portion C can contact with the metal rings 191 for charging the power supply unit 18 of the lighting module with variable colors 2.

In practice, the lamp L can be a desktop lamp, a wall lamp, a stand lamp, or a ceiling lamp. Herein, since the structures and technologies of the components of the lighting module with variable colors 2 are the same as those described in the previous embodiment, the detailed descriptions thereof will be omitted.

In summary, the lighting module with variable colors and lamp of the invention include a pressure sensor for detecting the pressure change of the internal space in the elastic portion, thereby enabling the color detecting unit to detect a color of a target. Thus, the present invention can detect the color of the environment or target, so that it is possible to automatically change the color of the emitted light approximate to the wavelength of the environment or target. Moreover, the present invention can achieve the above without the additional control system, thereby rapidly and accurately responding any user operation.

Although the present invention has been described in considerable detail with reference to certain preferred embodiments thereof, the disclosure is not for limiting the scope of the invention. Persons having ordinary skill in the art may make various modifications and changes without departing from the scope. Therefore, the scope of the appended claims should not be limited to the description of the preferred embodiments described above.

## Claims

1. A lighting module with variable colors (1, 2), comprising:
an elastic portion (11) having an internal space, wherein a color transformation signal (S₁) is output if the elastic portion is deformed;
a color detecting unit (13), wherein the color detecting unit (13) receives the color transformation signal (S₁) and is initiated based on the color transformation signal for detecting a color of a target to generate a color signal (S₂);
a light emitting unit (14) disposed in the elastic portion (11), and emitting a light corresponding to the color signal;
**characterized in that** said lighting module further comprises:
a housing (15) connected to the elastic portion (11);
a charging unit (19) disposed surrounding an outer surface of the housing (15),
a switch (16) disposed on the housing (15);
a power supply unit (18) coupled to the switch (16), wherein the switch (15) enables the power supply unit (18) to apply a power source to the light emitting unit (14); and
wherein the charging unit (19) is coupled to the power supply unit (18).

2. The lighting module according to claim 1, further comprising:
a processing unit (17) coupled to the light emitting unit (14) and the color detecting unit (13), and controlling the light emitting unit (14) to emit the light corresponding to the color signal.

3. The lighting module according to claim 1, wherein the switch (16) is a slide switch.

4. The lighting module according to any of the preceding claims, wherein the power supply unit (18) is a secondary battery.

5. The lighting module according to any of the preceding claims, wherein the light emitting unit (14) comprises a light-emitting diode.

6. The lighting module according to any of the preceding claims, wherein the elastic portion (11) is made of silica gel.

7. The lighting module according to any of the preceding claims, further comprising:
a pressure sensor (12) coupled to the internal space of the elastic portion (11),
and detecting the pressure change of the internal space to output the color transformation signal (S₁).

8. The lighting module according to claim 7, wherein the pressure sensor is an on-chip pressure sensor.

9. The lighting module according to claim 7, wherein the pressure sensor (12) comprises:
an elastic element (121) coupled to the internal space of the elastic portion for detecting the pressure change of the internal space;
an electrical conductive element (122) coupled to the elastic element (11); and
a switch element (123) coupled to the electrical conductive element (122) and outputting the color transformation signal according to the pressure change of the internal space.

10. The lighting module according to any of claims 7 to 9, wherein the sensing range of the pressure sensor (12) is between 26 and 300 Kpa.

11. The lighting module according to claim 10, wherein the sensing range of the pressure sensor (12) is between 50 and 100 Kpa.

12. The lighting module according to any of the preceding claims, further comprising:
a magnetic element (21) configured for turning on a reed switch (M) when the lighting module with variable colors is disposed on a lamp, thereby enabling the lamp to emit light.

13. The lighting module according to any of the preceding claims, further comprising:
a transmission unit (22) coupled to the color detecting unit (13) for transmitting the color signal when the lighting module with variable colors is disposed on a lamp, thereby allowing the lamp to emit the light corresponding to the color signal.

14. A lamp (L), comprising: a lamp holder (LS) having an accommodating space (S) and a light emitting unit; and a lighting module with variable colors (1, 2) according to any of the preceding claims, which is disposed in the accommodating space (S) of the lamp holder (LS), wherein a transmission unit (22) of the lighting module with variable colors (2) transmits the color signal to the lamp holder (LS), so that the lamp holder (LS) can emit the light in accordance with the color signal.

## Patentansprüche

1. Beleuchtungsmodul mit veränderlichen Farben (1, 2), umfassend:
einen elastischen Abschnitt (11) mit einem Innenraum, wobei ein Farbtransformationssignal (S1) ausgegeben wird, wenn der elastische Abschnitt verformt wird;
eine Farberfassungseinheit (13), wobei die Farberfassungseinheit (13) das Farbtransformationssignal (S1) empfängt und auf der Grundlage des Farbtransformationssignals ausgelöst wird, um eine Farbe eines Targets zu erfassen, um ein Farbsignal (S2) zu erzeugen;
eine lichtemittierende Einheit (14), die in dem elastischen Abschnitt (11) angeordnet ist und Licht entsprechend dem Farbsignal ausgibt;
**dadurch gekennzeichnet, dass** das Beleuchtungsmodul ferner aufweist:
ein Gehäuse (15), das mit dem elastischen Abschnitt (11) verbunden ist;
eine Ladeeinheit (19), die eine Außenseite des Gehäuses (15) umgibt,
einen am Gehäuse (15) angeordneten Schalter (16);
eine mit dem Schalter (16) gekoppelte Stromversorgungseinheit (18), wobei der Schalter (15) ermöglicht, das die Stromversorgungseinheit (18) eine Stromquelle an die lichtemittierende Einheit (14) anlegt; und
wobei die Ladeeinheit (19) mit der Stromversorgungseinheit (18) gekoppelt ist.

2. Beleuchtungsmodul nach Anspruch 1, weiterhin umfassend:
eine Verarbeitungseinheit (17), die mit der lichtemittierenden Einheit (14) und der Farberfassungseinheit (13) gekoppelt ist und zum die lichtemittierende Einheit (14) steuert, um das dem Farbsignal entsprechende Licht auszugeben.

3. Beleuchtungsmodul nach Anspruch 1, wobei der Schalter (16) ein Schiebeschalter ist.

4. Beleuchtungsmodul nach einem der vorhergehenden Ansprüche, wobei die Stromversorgungseinheit (18) eine Sekundärbatterie bzw. ein Akkumulator ist.

5. Beleuchtungsmodul nach einem der vorhergehenden Ansprüche, wobei die lichtemittierende Einheit (14) eine Leuchtdiode umfasst.

6. Beleuchtungsmodul nach einem der vorhergehenden Ansprüche, wobei der elastische Abschnitt (11) aus Kieselgel besteht.

7. Beleuchtungsmodul nach einem der vorhergehenden Ansprüche, weiterhin umfassend:
einen Drucksensor (12), der mit dem Innenraum des elastischen Abschnitts (11) gekoppelt ist, und die Druckänderung des Innenraums erfasst, um das Farbtransformationssignal (S1) auszugeben.

8. Beleuchtungsmodul nach Anspruch 7, wobei der Drucksensor ein on-Chip-Drucksensor ist.

9. Beleuchtungsmodul nach Anspruch 7, wobei der Drucksensor (12) umfasst:
ein elastisches Element (121), das mit dem Innenraum des elastischen Abschnitts verbunden ist, um die Druckänderung des Innenraums zu erfassen;
ein elektrisches leitendes Element (122), das mit dem elastischen Element (11) gekoppelt ist; und
ein Schaltelement (123), das mit dem elektrisch leitfähigen Element (122) gekoppelt ist und das Farbtransformationssignal entsprechend der Druckänderung des Innenraums ausgibt.

10. Beleuchtungsmodul nach einem der Ansprüche 7 bis 9, wobei der Erfassungsbereich des Drucksensors (12) zwischen 26 und 300 Kpa liegt.

11. Beleuchtungsmodul nach Anspruch 10, wobei der Erfassungsbereich des Drucksensors (12) zwischen 50 und 100 Kpa liegt.

12. Beleuchtungsmodul nach einem der vorhergehenden Ansprüche, weiterhin umfassend:
ein magnetisches Element (21), das ausgelegt ist, um einen Reed-Schalter (M) einzuschalten, wenn das Beleuchtungsmodul mit den veränderlichen Farben auf einer Lampe angeordnet ist, sodass die Lampe Licht abstrahlen kann.

13. Beleuchtungsmodul nach einem der vorhergehenden Ansprüche, weiterhin umfassend:
eine Übertragungseinheit (22), die mit der Farberfassungseinheit (13) gekoppelt ist, um das Farbsignal zu übertragen, wenn das Beleuchtungsmodul mit den veränderlichen Farben auf einer Lampe angeordnet ist, sodass die Lampe das Licht entsprechend dem Farbsignal abstrahlen kann.

14. Lampe (L), umfassend: einen Lampenhalter (LS) mit einem Aufnahmeraum (S) und einer lichtemittierenden Einheit; und ein Beleuchtungsmodul mit veränderlichen Farben (1, 2) nach einem der vorhergehenden Ansprüche, das in dem Aufnahmeraum (S) des Lampenhalters (LS) angeordnet ist, wobei eine Übertragungseinheit (22) des Beleuchtungsmoduls mit den veränderlichen Farben (2) das Farbsignal an den Lampenhalter (LS) überträgt, so dass der Lampenhalter (LS) das Licht entsprechend dem Farbsignal abstrahlen kann.

## Revendications

1. Un module d'éclairage avec des couleurs variables (1, 2), comprenant:
une partie élastique (11) ayant un espace interne, dans lequel un signal de transformation de couleur (S1) est délivré si la partie élastique est déformée;
une unité de détection de couleur (13), dans laquelle l'unité de détection de couleur (13) reçoit le signal de transformation de couleur (S1) et est initiée sur la base du signal de transformation de couleur pour détecter une couleur d'une cible pour générer un signal de couleur (S2);
une unité d'émission de lumière (14) disposée dans la partie élastique (11), et émettant une lumière correspondant au signal de couleur;
**caractérisé en ce que** ledit module d'éclairage comporte en outre :
un boîtier (15) relié à la partie élastique (11) ;
une unité de charge (19) disposée autour d'une surface externe du boîtier (15);
un commutateur (16) disposé sur le boîtier;
une unité d'alimentation (18) couplée au commutateur (16), dans lequel le commutateur (15) permet à l'unité d'alimentation (18) d'appliquer une source d'alimentation à l'unité d'émission de lumière; et
dans laquelle l'unité de charge (19) est couplée à l'unité d'alimentation (18).

2. Le module d'éclairage selon la revendication 1, comprenant en outre :
une unité de traitement (17) couplée à l'unité d'émission de lumière (14) et à l'unité de détection de couleur (13), et commandat l'unité d'émission de lumière (14) pour émettre la lumière correspondant au signal de couleur.

3. Le module d'éclairage selon la revendication 1, dans lequel le commutateur (16) est un interrupteur à glissière.

4. Le module d'éclairage selon l'une quelconque des revendications précédentes, dans lequel l'unité d'alimentation (18) est une batterie secondaire.

5. Le module d'éclairage selon l'une quelconque des revendications précédentes, dans lequel l'unité d'émission de lumière (14) comprend une diode électroluminescente.

6. Le module d'éclairage selon l'une quelconque des revendications précédentes, dans lequel la partie élastique (11) est constituée de gel de silice.

7. Le module d'éclairage selon l'une quelconque des revendications précédentes, comprenant en outre:
un capteur de pression (12) couplé à l'espace interne de la partie élastique (11)et détectant le changement de pression de l'espace interne pour délivrer le signal de transformation de couleur (S1).

8. Le module d'éclairage selon la revendication 7, dans lequel le capteur de pression est un capteur de pression intégré.

9. Le module d'éclairage selon la revendication 7, dans lequel le capteur de pression (12) comprend:
un élément élastique (121) couplé à l'espace interne de la partie élastique pour détecter le changement de pression de l'espace interne;
un élément électriquement conducteur (122) couplé à l'élément élastique (11); et
un élément de commutation (123) couplé à l'élément électriquement conducteur (122) et délivrant le signal de transformation de couleur en fonction du changement de pression de l'espace interne.

10. Le module d'éclairage selon l'une quelconque des revendications 7 à 9, dans lequel la plage de détection du capteur de pression (12) est comprise entre 26 et 300 Kpa.

11. Le module d'éclairage selon la revendication 10, dans lequel la plage de détection du capteur de pression (12) est comprise entre 50 et 100 Kpa.

12. Le module d'éclairage selon l'une quelconque des revendications précédentes, comprenant en outre:
un élément magnétique (21) configuré pour faire tourner un interrupteur à anches (M) lorsque le module d'éclairage à couleurs variables est disposé sur une lampe, permettant ainsi l'émission de lumière par la lampe.

13. Le module d'éclairage selon l'une quelconque des revendications précédentes, comprenant en outre:
une unité de transmission (22) couplée à l'unité de détection de couleur (13) pour transmettre le signal de couleur lorsque le module d'éclairage à couleurs variables est disposé sur une lampe, ce qui permet à la lampe d'émettre la lumière correspondant au signal de couleur.

14. Une lampe (L), comprenant: un support de lampe (LS) ayant un espace de logement (S) et une unité d'émission de lumière ; et
un module d'éclairage à couleurs variables (1, 2), selon l'une quelconque des revendications précédentes, qui est disposé dans l'espace de logement (S) du support de lampe (LS), dans laquelle une unité de transmission (22) du module d'éclairage à couleurs variables (2) transmet le signal de couleur au support de lampe (LS), de telle façon que le support de lampe (LS) peut émettre la lumière en fonction du signal de couleur.
